# EUROPEAN PATENT APPLICATION

(11) **EP 4 529 090 A1**
(43) Date of publication of application: **26.03.2025**
(21) Application number: 23876070.6
(22) Date of filing: 10.03.2023
(51) Int. Cl.: H04L 9/40

(54) **DATA TRANSMISSION METHOD AND APPARATUS, AND DEVICE AND STORAGE MEDIUM**

(30) Priority: 11.10.2022 CN 202211239665
(71) Applicant: Shenzhen National Engineering Laboratory of Digital Television Co. Ltd., Shenzhen, Guangdong 518063 (CN)
(72) Inventor: YU, Xiaolong, Shenzhen, Guangdong 518063 (CN); LI, Xinguo, Shenzhen, Guangdong 518063 (CN); CHANG, Lin, Shenzhen, Guangdong 518063 (CN); XU, Linyu, Shenzhen, Guangdong 518063 (CN); WU, Yujie, Shenzhen, Guangdong 518063 (CN)
(74) Representative: Lohmanns Lohmanns & Partner mbB
(86) International application number: PCT/CN2023/080845
(87) International publication number: WO 2024/077857

(57) **Abstract**

The embodiments of the present application belong to the technical field of artificial intelligence. Provided are a data transmission method and apparatus, and a device and a storage medium. The method comprises: a sending end and a receiving end performing a shared-key check, so as to obtain key check information; if the key check information indicates that no key is shared, the sending end and the receiving end performing key negotiation processing, so as to obtain a shared main key; the sending end generating a content key according to preset stream identification information; the sending end performing encryption processing on the content key according to the shared main key, so as to obtain an encrypted key, and sending the encrypted key to the receiving end; the sending end performing, according to the content key and the stream identification information, encryption processing on original data to be sent, so as to obtain target data, and sending the target data to the receiving end; and the receiving end performing decryption processing on the target data according to the stream identification information, the shared main key and the encrypted key, so as to obtain the original data. By means of the embodiments of the present application, data of different links can be protected in a differentiated manner, and the security of data transmission can be improved.

## Description

### TECHNICAL FIELD

The present disclosure relates to the technical field of Artificial Intelligence, in particular to a data transmission method, a data transmission apparatus, a device and a storage medium.

### BACKGROUND

At present, end-to-end data transmission has become popular. In order to improve the security of data transmission, it is necessary to encrypt data to be transmitted before transmission. However, in related technology, data in different links are encrypted with the same secret key and then transmitted, which leads to reduction of the security of data transmission. Differential protection of data in different links is urgently needed.

### SUMMARY

A data transmission method, a data transmission apparatus, a device and a storage medium are disclosed, intending to realize differential protection of data in different links and improving the security of data transmission.

In accordance with a first aspect of the present disclosure, an embodiment discloses a data transmission method, which includes:
performing a shared secret key check between a sender and a receiver to obtain secret key check information;
in response to the secret key check information indicating that no secret key is shared, performing secret key negotiation between the sender and the receiver to obtain a shared master secret key;
generating, by the sender, a content secret key according to preset stream identification information;
encrypting, by the sender, the content secret key according to the shared master secret key to obtain an encryption secret key, and sending, by the sender, the encryption secret key to the receiver;
encrypting, by the sender, original data to be sent according to the content secret key and the stream identification information to obtain target data, and sending, by the sender, the target data to the receiver;
decrypting, by the receiver, the target data according to the stream identification information, the shared master secret key and the encryption secret key to obtain the original data.

In some embodiments, performing secret key negotiation between the sender and the receiver to obtain a shared master secret key includes:
sending, by the sender, identity information to the receiver, such that the receiver performs authentication according to the identity information to obtain authentication information;
in response to the authentication information indicating that the authentication passes, establishing communication connection between the sender and the receiver; and
generating, by the sender, the shared master secret key, and sending, by the sender, the shared master secret key to the receiver.

In some embodiments, encrypting, by the sender, original data to be sent according to the content secret key and the stream identification information to obtain target data, and sending, by the sender, the target data to the receiver includes:
selecting, by the sender, candidate data from the original data according to the stream identification information; and
encrypting, by the sender, the candidate data according to the content secret key to obtain the target data, and sending, by the sender, the target data to the receiver.

In some embodiments, decrypting, by the receiver, the target data according to the stream identification information, the shared master secret key and the encryption secret key to obtain the original data includes:
decrypting, by the receiver, a plurality of encryption secret keys according to the shared master secret key to obtain a plurality of content secret keys;
selecting, by the receiver, a selected secret key from the plurality of content secret keys according to the stream identification information;
decrypting, by the receiver, the target data according to the selected secret key to obtain the original data.

In some embodiments, after encrypting, by the sender, original data to be sent according to the content secret key and the stream identification information to obtain target data, the method further includes:
performing, by the sender, scrambling transmission on the target data, which includes:
scrambling, by the sender, the target data to obtain noise random data; and
sending, by the sender, the noise random data to the receiver, such that the receiver receives the noise random data for descrambling to obtain the target data.

In some embodiments, before encrypting, by the sender, original data to be sent according to the content secret key and the stream identification information to obtain target data, the method further includes:
generating, by the sender, the original data, which includes:
acquiring, by the sender, data to be sent;
performing, by the sender, format conversion on the data to be sent to obtain the original data.

In some embodiments, after encrypting, by the sender, original data to be sent according to the content secret key and the stream identification information to obtain target data, the method further includes:
performing, by the sender, encryption marking on the target data, which includes:
generating, by the sender, encryption mark information according to the stream identification information, wherein, the encryption mark information is configured to indicate that the target data is encrypted data;
sending, by the sender, the encryption mark information to the receiver.

In accordance with a second aspect of the present disclosure, a data transmission apparatus is disclosed, which includes a sender and a receiver, where the sender includes a first authentication module, a first secret key negotiation module, an encryption module and a first transmission module; and the receiver includes a second authentication module, a second secret key negotiation module, a decryption module and a second transmission module; where,
a shared secret key check is performed between the first authentication module and the second authentication module to obtain secret key check information;
in response to the secret key check information indicating that no secret key is shared, secret key negotiation is performed between the first authentication module and the second authentication module to obtain a shared master secret key;
the first secret key negotiation module generates a content secret key according to preset stream identification information;
the first secret key negotiation module encrypts the content secret key according to the shared master secret key to obtain an encryption secret key, and the first transmission module sends the encryption secret key to the second secret key negotiation module;
the encryption module encrypts original data to be sent according to the content secret key and the stream identification information to obtain target data, and the first transmission module sends the target data to the second transmission module; and
the decryption module decrypts the target data according to the stream identification information, the shared master secret key and the encryption secret key to obtain the original data.

In accordance with a third aspect of the present disclosure, an electronic device is disclosed, which includes a memory and a processor, where the memory stores a computer program which, when executed by the processor, implements the method described in the first aspect.

In accordance with a fourth aspect of the present disclosure, a computer-readable storage medium is disclosed, which stores a computer program which, when executed by a processor, implements the method described in the first aspect.

According to the data transmission method, the data transmission apparatus, the device and the storage medium disclosed in the present disclosure, the sender encrypts the content secret key according to the shared master secret key to obtain the encryption secret key and then sends the encryption secret key to the receiver; and the receiver decrypts the target data through the encryption secret key, the shared master secret key and the stream identification information to obtain the original data, which not only ensures the security of the content secret key transmission, but also makes the data transmission operation simple, and does not depend on the encrypted transmission of the data interface link or affect normal data decryption at the receiver.

### BRIEF DESCRIPTION OF DRAWINGS

FIG. 1 is a flowchart of a data transmission method provided by an embodiment of the present disclosure;
FIG. 2 is a flowchart of a data transmission method provided by another embodiment of the present disclosure;
FIG. 3 is a flowchart of step S105 in FIG. 1;
FIG. 4 is a flowchart of step S106 in FIG. 1;
FIG. 5 is a flowchart of step S304 in FIG. 3;
FIG. 6 is a flowchart of a data transmission method provided by another embodiment of the present disclosure;
FIG. 7 is a flowchart of a data transmission method provided by another embodiment of the present disclosure;
FIG. 8 is a schematic structural diagram of a data transmission apparatus provided by an embodiment of the present disclosure; and
FIG. 9 is a schematic diagram of a hardware structure of an electronic device provided by an embodiment of the present disclosure.

### DETAILED DESCRIPTION

In order to make the purpose, technical scheme and advantages of the present disclosure more clear, the present disclosure will be further described in detail with the attached drawings and embodiments. It should be understood that the embodiments described herein are only used to explain the present disclosure, and are not used to limit the present disclosure.

It should be noted that although the functional modules are divided in the schematic diagram of the apparatus and the logical order is shown in the flowchart, in some cases, the steps shown or described may be executed in an order different from the module division in the apparatus or in the flowchart. The terms "first" and "second" in the specification and claims and the above drawings are used to distinguish similar objects, and are not necessarily used to describe a specific order or sequence.

Unless otherwise defined, all technical and scientific terms used herein have the same meaning as commonly understood by those skilled in the technical field of the present disclosure. The terminology used herein is only for the purpose of describing the embodiments of the present disclosure, and is not intended to limit the present disclosure.

Firstly, some terms involved in the present disclosure are explained as below.

Artificial Intelligence (AI). It is a new technical science to study and develop theories, methods, technologies and application systems for simulating, extending and expanding human intelligence. Artificial Intelligence is a branch of computer science, which attempts to understand the essence of intelligence and produce a new intelligent machine that can respond in a similar way to human intelligence. The research in this field includes robot, language recognition, image recognition, natural language processing and expert system. Artificial Intelligence can simulate the information process of human consciousness and thinking. Artificial Intelligence is also a theory, method, technology and application system that uses digital computers or machines controlled by digital computers to simulate, extend and expand human intelligence, perceive the environment, acquire knowledge and use knowledge to obtain the best results.

Secret Key. A secret key refers to some secret information used to complete cryptographic applications such as encryption, decryption and integrity verification. In symmetric cryptography (or secret key cryptography), encryption and decryption use the same secret key, so the secret key needs to be kept secret. In public key cryptography (or asymmetric cryptography), the keys used for encryption and decryption are different, usually one is public and called the public key, and another is secret and called the private key.

Stream identification. A stream identification is an identifier, which marks IP data streams that need special processing. Routers passed through by the IP data streams in the network identify different required service performances according to the indication of the stream identification, and may perform special processing on the data streams according to their priority, delay or bandwidth, thus ensuring the transmission requirements of these data streams.

High-bandwidth digital content protection (HDCP). The technical specification of HDCP is initiated by Intel. When users illegally copy, this technology will interfere and reduce the quality of copied images, thus protecting the content. During HDCP transmission, both the sender and the receiver store an available secret key set, and these secret keys are stored in secret. Both the sender and the receiver perform encryption and decryption operations according to the secret keys, and a special value KSV (Key Selection Vector) is added to this operation. Meanwhile, each HDCP device has a unique KSV serial number, and the password processing units of the sender and receiver will check each other's KSV value to ensure that the connection is legal. The HDCP encryption involves processing each pixel, which makes the image irregular and unrecognizable. Only the sender and receiver after synchronization can reverse the processing and complete the data restoration.

Digital interface content protection. The digital content transmitted on the digital interface is easy to be intercepted, resulting in piracy, and the digital content is usually protected by encryption. Content protection needs to consider two parts: content secret key transmission and content decryption.

Display Port (DP): DP is a digital interface standard specification issued by VESA (Video Electronics Standards Association). It can support Multi-Stream Transport and is widely used in PC, notebook, Internet of Things and other fields.

Hash. Hash in the present disclosure refers to cryptographic hash functions, such as HMAC (Hash-based Message Authentication Code), CMAC (Cipher-based Message Authentication Code), HASH and other types of functions, which take a message or a secret key combined with a message as input and generate a message digest as output. Cryptographic hash function has the characteristics of one-way, anti-collision and so on.

With the development of high-speed interface, end-to-end architecture has become the mainstream. It is difficult to realize the content protection differentiation of different content streams by link-based encryption, that is, it is difficult to realize that different streams use different secret keys and different streams use different authorization strategies.

Based on this, embodiments of the present disclosure provide a data transmission method, a data transmission apparatus, a device and a storage medium. A shared master secret key is obtained through negotiation between a sender and a receiver. The sender generates a content secret key according to preset stream identification information. The content secret key is encrypted according to the shared master secret key to obtain an encryption secret key. The encryption secret key is transmitted to the receiver. Then, the sender encrypts original data according to the content secret key to obtain the target data, and sends the target data to the receiver. The receiver decrypts the target data according to the stream identification information, the shared master secret key and the encryption secret key to obtain the original data. Therefore, the content secret key is generated according to different stream identification information, so that different content data adopt different secret keys to prevent the mutual influence between the data. Secondly, the encryption secret key is obtained by configuring the shared master secret key to encrypt the content secret key, so as to protect different content secret keys and make data transmission simpler and safer. Moreover, data transmission has nothing to do with data interface link transmission and does not affect the normal decryption of the receiver. Only the sender and the receiver need to support content protection to realize secure data transmission.

The data transmission method, the data transmission apparatus, device and storage medium provided by the embodiments of the present disclosure are described by the following embodiments. First, the data transmission method in the embodiments of the present disclosure is described.

The embodiment of the present disclosure may acquire and process related data based on Artificial Intelligence technology. Artificial Intelligence (AI) is a theory, method, technology and application system that uses digital computers or machines controlled by digital computers to simulate, extend and expand human intelligence, perceive the environment, acquire knowledge and use knowledge to obtain the best results.

Basic technologies of Artificial Intelligence generally include technologies such as sensors, dedicated Artificial Intelligence chips, cloud computing, distributed storage, big data processing technology, operation/interaction system, mechatronics and so on. Artificial Intelligence software technology mainly includes computer vision technology, robotics technology, biometrics technology, voice processing technology, natural language processing technology and machine learning/deep learning.

The data transmission method disclosed in the embodiments of the present disclosure relates to the technical field of Artificial Intelligence. The data transmission method disclosed in the embodiments of the present disclosure may be applied to a terminal, a server, or software running in the terminal or the server. In some embodiments, the terminal may be a smartphone, a tablet computer, a notebook computer, a desktop computer, etc. The server may be configured as an independent physical server, a server cluster or a distributed system composed of multiple physical servers, or a cloud server that provides basic cloud computing services such as cloud service, cloud database, cloud computing, cloud function, cloud storage, network service, cloud communication, middleware service, domain name service, security service, CDN (Content Delivery Network), big data and Artificial Intelligence platform. The software may be an application that realizes the data transmission method, but it is not limited to the above forms.

The present disclosure may be used in many general or special computer system environments or configurations. For example, personal computers, server computers, handheld devices or portable devices, tablet devices, multiprocessor systems, microprocessor-based systems, set-top boxes, programmable consumer electronic devices, network PCs, minicomputers, mainframe computers, distributed computing environments including any of the above systems or devices, and so on. The present disclosure may be described in the general context of computer-executable instructions, such as program modules, being executed by a computer. Generally, program modules include routines, programs, objects, components, data structures, etc. that perform particular tasks or implement particular abstract data types. The present disclosure may also be practiced in distributed computing environments where tasks are performed by remote processing devices that are connected through a communication network. In a distributed computing environment, program modules may be located in local and remote computer storage media including storage devices.

It should be noted that in each embodiment of the present disclosure, when it comes to the need to process data related to user identity or characteristics, such as user information, user behavior data, user historical data and user location information, the user's permission or consent will be obtained first, and the collection, use and processing of these data abide by the relevant laws, regulations and standards of relevant countries and regions. In addition, when the embodiments of the present disclosure need to obtain sensitive personal information of a user, the user's separate permission or consent is obtained by ways such as pop-up windows or redirecting to the confirmation page, and necessary user-related data for the normal operation of the embodiments of the present disclosure is obtained after the user's separate permission or consent is explicitly obtained.

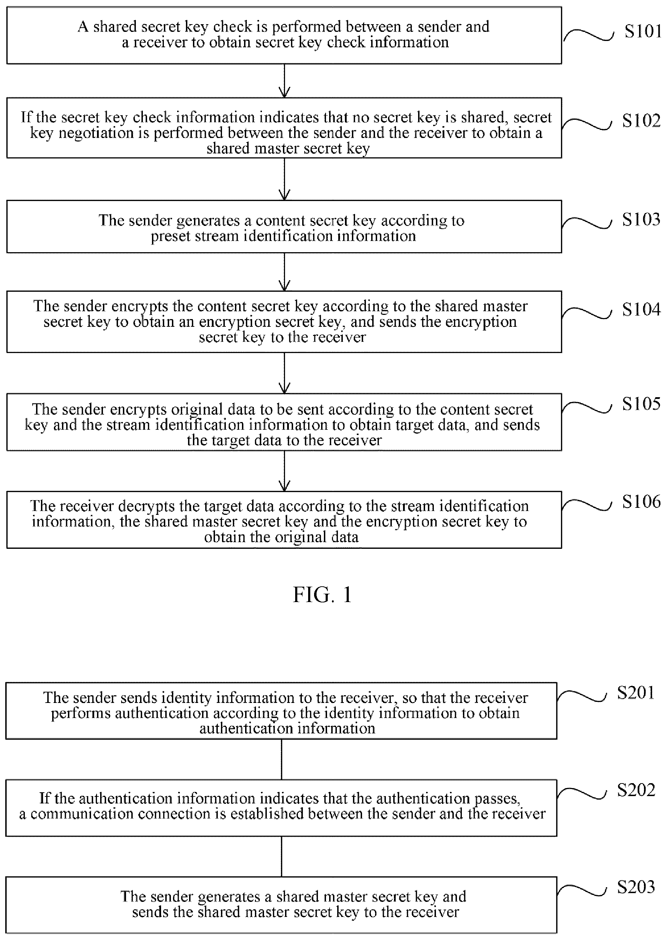

FIG. 1 is an optional flowchart of the data transmission method disclosed in an embodiment of the present disclosure, and the method in FIG. 1 may include, but is not limited to, steps S101 to S106.

In step S101, a shared secret key check is performed between a sender and a receiver to obtain secret key check information.

In step S102, if the secret key check information indicates that no secret key is shared, secret key negotiation is performed between the sender and the receiver to obtain a shared master secret key.

In step S103, the sender generates a content secret key according to preset stream identification information.

In step S104, the sender encrypts the content secret key according to the shared master secret key to obtain an encryption secret key, and sends the encryption secret key to the receiver.

In step S105, the sender encrypts original data to be sent according to the content secret key and the stream identification information to obtain target data, and sends the target data to the receiver.

In step S106, the receiver decrypts the target data according to the stream identification information, the shared master secret key and the encryption secret key to obtain the original data.

In steps S101 to S106 illustrated in the embodiment of the present disclosure, the shared secret key check is performed between the sender and the receiver to obtain the secret key check information. If the secret key check information indicates that no secret key is shared, the secret key negotiation is performed between the sender and the receiver to obtain a shared master secret key. Then the sender generates the content secret key according to the preset stream identification information. The sender encrypts the content secret key according to the shared master secret key to obtain the encryption secret key, and sends the encryption secret key to the receiver. The sender also encrypts the original data to be sent according to the content secret key and the stream identification information to obtain the target data, and sends the target data to the receiver. The receiver decrypts the target data according to the shared master secret key, the stream identification information and the encryption secret key to obtain the original data. Therefore, different data are encrypted with different secret keys by generating content secret keys according to the preset stream identification information. The sender and the receiver negotiate to generate the shared master secret key; the sender encrypts the content secret key according to the shared master secret key to obtain the encryption secret key and then sends the encryption secret key to the receiver; and the receiver decrypts the target data through the encryption secret key, the shared master secret key and the stream identification information to obtain the original data, which not only ensures the security of the content secret key transmission, but also makes the data transmission operation simple, and does not depend on the encrypted transmission of the data interface link or affect normal data decryption at the receiver.

In step S101, the shared secret key check is performed between the sender and the receiver to check whether there is a shared master secret key between the sender and the receiver to obtain secret key check information. In some embodiments, the sender and the receiver perform an authentication state check to check whether authentication is performed between the sender and the receiver to obtain secret key check information. The secret key check information may indicate that no secret key is shared, and the secret key check information may also indicate that a secret key is shared. If the secret key check information indicates that a secret key is shared, it means that the authentication state between the sender and the receiver is authenticated, and there is a shared master secret key between the sender and the receiver. If the secret key check information indicates that no secret key is shared, it means that the authentication state between the sender and the receiver is unauthenticated, and there is no shared master secret key between the sender and the receiver. Therefore, the shared secret key between the sender and the receiver is checked to judge the authentication state between the sender and the receiver, so as to determine whether it is necessary for the sender and the receiver to perform secret key negotiation to obtain the shared master secret key.

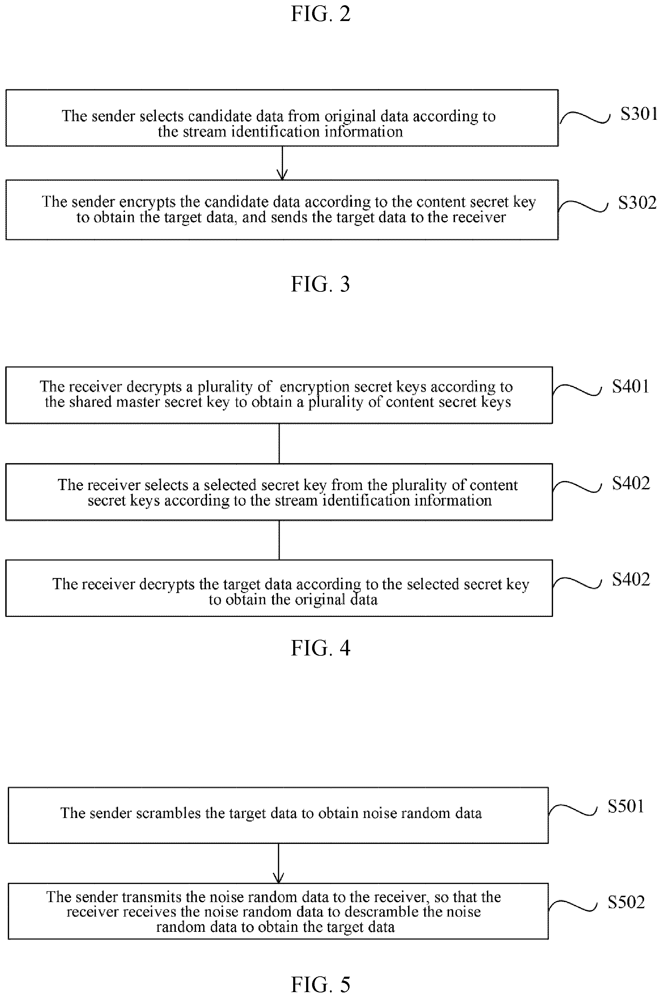

Please refer to FIG. 2. In some embodiments, the step that secret key negotiation is performed between the sender and the receiver to obtain a shared master secret key may include but is not limited to steps S201 to S203.

In step S201, the sender sends identity information to the receiver, so that the receiver performs authentication according to the identity information to obtain authentication information.

In step S202, if the authentication information indicates that the authentication passes, a communication connection is established between the sender and the receiver.

In step S203, the sender generates a shared master secret key and sends the shared master secret key to the receiver.

In some embodiments, in step S201, if the secret key check information indicates that no secret key is shared, it means that the authentication state between the sender and the receiver is unauthenticated, and the authentication between the sender and the receiver is required first. Therefore, the sender sends the identity information to the receiver for authentication to obtain authentication information, so as to determine whether the sender and the receiver may transmit data.

It should be noted that the sender authenticates with the receiver based on a security authentication protocol, and the security authentication protocol realizes identity authentication and shared secret key negotiation through asymmetric algorithm. The security authentication protocol may be AKE (Authentication and Key Exchange) of HDCP or a handshake protocol of TLS (Transport Layer Security).

In some embodiments, in step S202, if the authentication information indicates that the authentication passes, it means that the sender and the receiver may normally transmit data, and the communication connection is established between the sender and the receiver.

In some embodiments, in step S203, after communication connection is established between the sender and the receiver, the sender and the receiver perform the shared secret key negotiation based on the security authentication protocol to obtain the shared master secret key, and then the sender sends the shared master secret key to the receiver.

From step S201 to step S203 illustrated in the embodiments, if the secret key check information indicates that no secret key is shared, the sender sends the identity information to the receiver for identity authentication to obtain authentication information. If the authentication information indicates that authentication passes, the communication connection is established between the sender and the receiver, then the sender and the receiver perform secret key negotiation to obtain the shared master secret key, and the sender sends the shared master secret key to the receiver. Therefore, after successful authentication, the communication connection is established between the sender and the receiver, and there is a shared master secret key. When the sender and the receiver transmit data, it is not necessary to share the shared master secret key again when the data is transmitted back, and it will not affect the receiver's data decryption.

In some embodiments, in step S103, the preset stream identification information represents a unique stream representation of data to generate a content secret key according to each stream identification information. Therefore, corresponding content secret keys are generated according to different stream identification information, so as to encrypt corresponding data according to the content secret keys. By generating content secret keys according to the stream identification information, different data may be encrypted with different content secret keys to prevent the mutual influence between data.

In some embodiments, in step S104, the sender encrypts the content secret key according to the shared master secret key to obtain the encryption secret key, and sends the encryption secret key to the receiver. Since the receiver and the sender have the same shared master secret key, the receiver may decrypt the encryption secret key according to the shared master secret key to obtain a plurality of content secret keys corresponding to different stream identification information, while other terminals cannot decrypt the encryption secret key, thus improving the security of secret key transmission, and there is no need for the sender and the receiver to repeatedly perform the shared master secret key negotiation.

It should be noted that the content secret key is a random number randomly generated according to the stream identification information, that is, Kci, then the content secret key is encrypted according to the shared master secret key to obtain the encryption secret key as EKci = Encrypt(Km, Kci), i = 1,2,•••. Km is the shared master secret key, and Kci is the content secret key corresponding to the stream identification information i. In addition, the ways that the sender encrypts the content secret key according to the shared master secret key may include hashing the shared master secret key by hash expansion, and then transmitting the stream identification information to the receiver, that is, Kci = HASH(Km, i), i = 1, 2, ..., where Km is the shared master secret key and i is the stream identification information. Therefore, the receiver receives the shared master secret key and the stream identification information to generate the content secret key according to the stream identification information and the shared master secret key, so as to improve the security of secret key transmission. Since the content secret key is encrypted by the shared master secret key and then transmitted, the shared master secret key may be transmitted by multiple receivers. For the scenario of data transmission between the sender and multiple receivers, the receivers do not need to authenticate with the sender again when sending back the data, which makes the data transmission safe and simple.

Referring to FIG. 3, in some embodiments, step S105 may include, but is not limited to, steps S301 to S302.

In step S301, the sender selects candidate data from original data according to the stream identification information.

In step S302, the sender encrypts the candidate data according to the content secret key to obtain the target data, and sends the target data to the receiver.

In some embodiments, in step S301, because different stream identification information corresponds to different content secret keys, in order to realize the corresponding encryption between content secret keys and data, the sender selects the candidate data from the original data according to the stream identification information to obtain the candidate data corresponding to the stream identification information.

The original data may be audio and video data or Tunnel data, and there is no specific restriction on the data type of the original data herein. If the original data is audio and video data, the sender is DP Source and the receiver is DP Sink, and data transmission is carried out between DP Source and DP Sink. If the original data is Tunnel data, the sender and receiver are USB devices, the transmission channel between USB devices is Tunnel, and the payload carried on the Tunnel is Tunnel data.

In some embodiments, in step S302, since the stream identification information matches the content secret key information, the sender encrypts the candidate data according to the content secret key to obtain the target data, so as to realize one-to-one data encryption of the content secret key to prevent mutual interference between the data.

From step S301 to step S302 illustrated in the embodiments, the sender selects the candidate data from the original data according to the stream identification information, and the sender encrypts the candidate data according to the content secret key to obtain the target data, and sends the target data to the receiver. Therefore, by encrypting different original data with different content secret keys one by one, data protection differentiation is realized.

Referring to FIG. 4, in some embodiments, step S106 may include, but is not limited to, steps S401 to S403.

In step S401, the receiver decrypts a plurality of encryption secret keys according to the shared master secret key to obtain a plurality of content secret keys.

In step S402, the receiver selects a selected secret key from the plurality of content secret keys according to the stream identification information.

In step S403, the receiver decrypts the target data according to the selected secret key to obtain the original data.

In some embodiments, in step S401, since the sender sends the encryption secret key to the receiver, after the receiver obtains the encryption secret key, the receiver decrypts the encryption secret key by the shared master secret key to obtain the content secret key.

In some embodiments, in step S402, the receiver decrypts the encryption secret key to obtain the content secret key. Furthermore, the receiver may decrypt a plurality of encryption secret keys to obtain the plurality of content secret keys, but there is only one target data, so it is necessary to select a matching content secret key from the plurality of content secret keys. Therefore, the selected secret key is selected from the plurality of content secret keys by the stream identification information, in other words, the selected secret key is obtained by obtaining the content secret key corresponding to the stream identification information, which makes the target data decryption more accurate.

In some embodiments, in step S403, the receiver decrypts the target data according to the selected secret key to obtain the original data corresponding to the stream identification information, so that the transmission of the original data is safe and simple, and the mutual interference between the data is reduced.

From step S401 to step S403 illustrated in the embodiments, the receiver decrypts the encryption secret key according to the shared master secret key to obtain the plurality of content secret keys, then the receiver selects the selected secret key from the plurality of content secret keys according to the stream identification information to obtain the selected secret key corresponding to the stream identification information, and then, the receiver decrypts the target data according to the selected secret key to obtain the original data. Therefore, after decrypting the encryption secret key, the selected secret key is selected from the plurality of content secret keys according to the stream identification information, so that the selected content secret key is obtained accurately and the target data decryption operation is accurate and simple.

Please refer to FIG. 5. In some embodiments, after step S106, the data transmission method may further include that the sender performs scrambling transmission on the target data. In order to further prevent the target data from being modified or cracked after being stolen at will by other terminals, the sender scrambles the target data to generate noise random data similar to white noise, so as to improve the security of target data transmission and reduce data leakage.

The scrambling transmission of the target data by the sender may include, but is not limited to, steps S501 to S502:
In step S501, the sender scrambles the target data to obtain noise random data.
In step S502, the sender transmits the noise random data to the receiver, so that the receiver receives the noise random data to descramble the noise random data to obtain the target data.

In some embodiments, in step S501, the sender scrambles the target data to obtain the noise random data similar to white noise, the sender transmits the noise random data in the transmission process, and other terminals cannot determine the noise random data as the target data, so as to prevent other terminals from stealing the target data at will and improve the security of the target data transmission.

In some embodiments, in step S502, the sender transmits the random noise data to the receiver, and then the receiver descrambles the random noise data to obtain the target data, so that the transmission of the target data is safe.

In steps S501 to S502 illustrated in the embodiments, the sender scrambles the target data to obtain noise random data, the sender transmits the noise random data to the receiver, and the receiver descrambles the noise random data to obtain the target data. Therefore, by transmitting the target data in the form of noise random data, the target data transmission is safe.

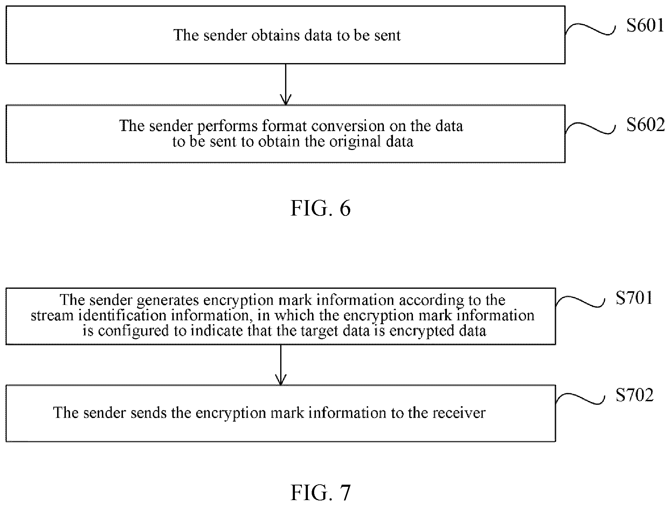

Please refer to FIG. 6. In some embodiments, before step S105, the data transmission method further includes a step that the sender generates the original data. Since the data transmission needs to be converted into the original data transmission, in which the original data is a data packet that can be transmitted, if the received data is not a data packet, the original data needs to be generated before data transmission.

The step that the sender generates the original data may include but is not limited to steps S601 to S602.

In step S601, the sender obtains data to be sent.

In step S602, the sender performs format conversion on the data to be sent to obtain the original data.

From step S601 to step S602 illustrated in the embodiments, if a content stream input module and a first transmission module are included in the sender, the content stream input module receives payload, and performs signal conversion and format conversion on the payload to obtain the original data that can be transmitted by the first transmission module.

Please refer to FIG. 7. In some embodiments, after step S105, the data transmission method further includes a step that the sender performs encryption marking on the target data. Since unencrypted data is also transmitted between the sender and the receiver, the receiver does not need to decrypt the unencrypted data, but needs to decrypt the encrypted target data. Therefore, by performing encryption marking on the target data by the sender, the receiver can determine whether the target data is encrypted or not according to an encryption mark, that is, determine whether it is necessary to decrypt the target data, which makes data processing more efficient.

The step that the sender performs encryption marking on the target data may include but is not limited to steps S701 to S702.

In step S701, the sender generates encryption mark information according to the stream identification information, in which, the encryption mark information is configured to indicate that the target data is encrypted data.

In step S702, the sender sends the encryption mark information to the receiver.

From step S701 to step S702 illustrated in the embodiments, the sender generates encryption mark information according to the stream identification information, and then the sender sends the encryption mark information to the receiver, so that the receiver can know which target data is encrypted and which target data is unencrypted, so as to determine that the target data needs to be decrypted according to the encryption mark information, which makes the subsequent processing operation of the target data more intelligent.

In the embodiment of the present disclosure, taking the transmission of audio and video data between DPs as an example. The sender is DP Source, the receiver is DP Sink, and the payload transmitted between the DP Source and the DP Sink is audio and video data. The audio and video data transmission process is as follows.

In Step 1, it is checked whether there is a shared master secret key for the DP Source and the DP Sink, if so, proceed to Step 2; if not, the DP Source executes the security authentication protocol, and the DP Source and the DP Sink negotiate to obtain the shared master secret key. Security authentication protocols generally realize identity authentication and shared secret key negotiation through asymmetric algorithms, such as AKE of HDCP and handshake protocol of TLS. The shared master secret key is always valid before the DP device is powered off.

In Step 2, if there is multi-stream transmission between the DP Source and the DP Sink, and each stream has unique stream identification information, the DP Source regenerates a new random content secret key for each stream, obtains an encryption secret key by encrypting the content secret key corresponding to the stream identification information through the master secret key shared with the DP Sink, and sends the encryption secret key to the DP Sink. The DP Sink decrypts the encryption secret key by the master secret key which is shared with the DP Source, so that both sides of the multi-stream transmission safely hold multiple content secret keys with different stream identification information. Encryption methods such as AES CTR mode are as follows.

EKci = AES - CTR (Km, Kci), i = 1, 2, ••• 63, where Km is the shared master secret key, and Kci is the content secret key corresponding to the stream identification information i. The DPs support up to 63 video streams at the same time.

In Step 3, for plaintext audio and video data meeting the standard, the audio and video data is encrypted with the content secret key corresponding to the stream identification information. The DP Source encrypts all or part of the active pixels of a video frame one by one by AES CTR mode.

In Step 4, the encrypted audio and video data is packaged by the DP Source into MTP transmitted by DP link, and a link layer of the DP Source transmits the encrypted MTP.

In Step 5, a scrambler of the DP Source scrambles the multiplexed data to form a noise random data stream similar to white noise, and then the DP Source transmits the noise random data stream to the DP Sink through a physical channel.

In Step 6, the DP Sink obtains the data stream through the physical channel, and the decoder descrambles the data stream and outputs the data stream to other modules in the link layer for processing.

In Step 7, a demultiplexing module in the link layer of the DP Sink demultiplexes the multi-streams and separates the encrypted audio and video data by parsing the micro-packet headers.

In Step 8, according to the stream identification information, the DP Sink decrypts the audio and video data by using the content secret key corresponding to the stream identification information, and decrypts all or part of the active pixels of the video frame one by one by using AES CTR mode for the video frame conforming to CTA-861.

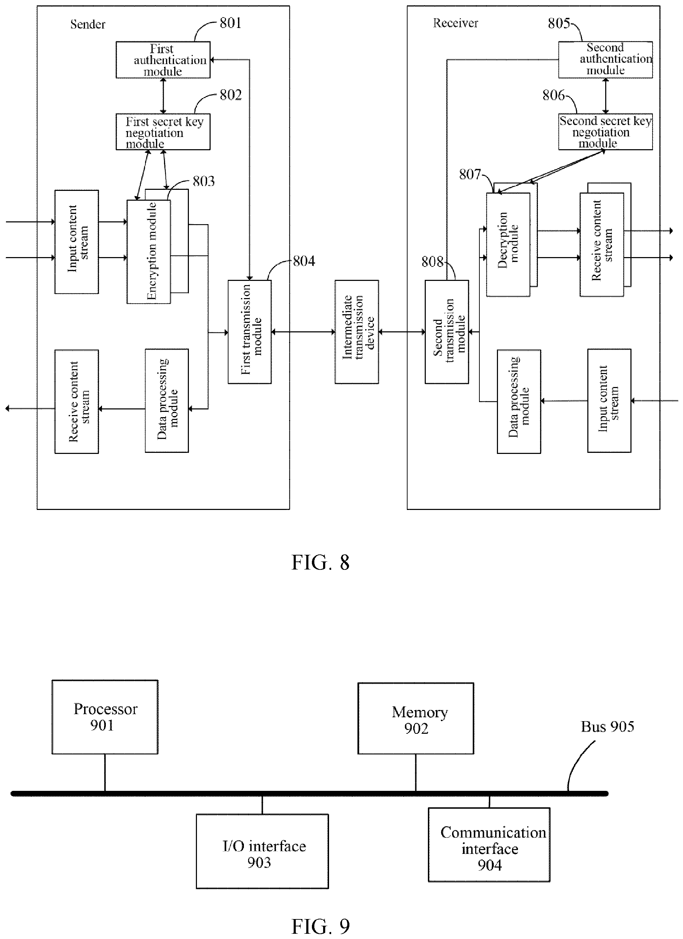

Please refer to FIG. 8. An embodiment of the present disclosure also discloses a data transmission apparatus, which may realize the above data transmission method. The apparatus includes a sender and a receiver. The sender includes a first authentication module 801, a first secret key negotiation module 802, an encryption module 803 and a first transmission module 804. The receiver includes a second authentication module 805, a second secret key negotiation module 806, a decryption module 807 and a second transmission module 808. A shared secret key check is performed between the first authentication module 801 and the second authentication module 805 to obtain secret key check information. If the secret key check information indicates that no secret key is shared, secret key negotiation is performed between the first authentication module 801 and the second authentication module 805 to obtain a shared master secret key. The first secret key negotiation module 802 generates a content secret key according to a preset stream identification information. The first secret key negotiation module 802 encrypts the content secret key according to the shared master secret key to obtain an encryption secret key, and the first transmission module 804 sends the encryption secret key to the second secret key negotiation module 806. The encryption module 803 encrypts original data to be sent according to the content secret key and the stream identification information to obtain target data, and the first transmission module 804 sends the target data to the second transmission module 808. The decryption module 807 decrypts the target data according to the stream identification information, the shared master secret key and the encryption secret key to obtain the original data.

The implementations of the data transmission apparatus are basically the same as the embodiment of the data transmission method described above, and will not be repeated here.

The embodiment of the present disclosure further discloses an electronic device, which includes a memory and a processor. The memory stores a computer program, and the data transmission method is implemented when the processor executes the computer program. The electronic device may be any intelligent terminal including a tablet computer, a vehicle-mounted computer and the like.

Please refer to FIG. 9, which illustrates a hardware structure of the electronic device according to another embodiment. The electronic device includes a processor 901, a memory 902, an input/output interface 903, a communication interface 904 and a bus 905.

The processor 901 may be implemented in the form of a general Central Processing Unit (CPU), a microprocessor, an Application Specific Integrated Circuit (ASIC), or one or more integrated circuits, and configured to execute a related program to realize the technical scheme disclosed in the embodiments of the present disclosure.

The memory 902 may be implemented in the form of a Read Only Memory (ROM), a static storage device, a dynamic storage device or a Random Access Memory (RAM). The memory 902 may store an operating system and other application programs, when the technical scheme disclosed in the embodiments of the present disclosure is realized by software or firmware, codes of the relevant program are stored in the memory 902, and the processor 901 implements the data transmission method of the embodiments of the present disclosure by executing the codes of the relevant program.

The input/output interface 903 is configured to realize information input and output.

The communication interface 904 is configured to realize the communication interaction between the electronic device and other devices, which may be realized by wired means (such as USB, network cable, etc.) or wireless means (such as mobile network, WIFI, Bluetooth, etc.).

The bus 905 is configured to transmit information among various components of the electronic device (such as the processor 901, the memory 902, the input/output interface 903 and the communication interface 904).

The processor 901, the memory 902, the input/output interface 903 and the communication interface 904 are connected to each other by the bus 905.

The embodiment of the present disclosure further discloses a computer-readable storage medium, which stores a computer program which, when executed by a processor, implements the data transmission method.

As a non-transient computer-readable storage medium, the memory may be configured to store non-transient software programs and non-transient computer-executable programs. In addition, the memory may include high-speed random access memory and non-transient memory, such as at least one disk memory device, flash memory device, or other non-transient solid-state memory devices. In some embodiments, the memory may optionally include memories remotely located with respect to the processor, and these remote memories may be connected to the processor through a network. Examples of the above-mentioned network include, but are not limited to, Internet, an intranet, a local area network, a mobile communication network, and combinations thereof.

In the data transmission method, the data transmission apparatus, the electronic device and the storage medium disclosed in the embodiments of the present disclosure, the content secret keys are generated according to different stream identification information, so that different content data adopt different secret keys to prevent mutual influence between the data. By setting the shared master secret key to encrypt the content secret key, the encryption secret key is obtained, so as to protect different content secret keys and make data transmission simpler and safer. Moreover, data transmission has nothing to do with data interface link transmission and does not affect the normal decryption of the receiver. It is only necessary for the sender and receiver to support content protection to realize data secure transmission.

The embodiments described in the present disclosure is to explain the technical scheme of the embodiment of the present disclosure more clearly, and does not constitute the limitation of the technical scheme disclosed in the embodiments of the present disclosure. As the technical evolution and the emergence of new application scenarios, the technical scheme disclosed in the embodiments of the present disclosure is also applicable to similar technical problems.

It should be understood by those skilled in the art that the technical scheme shown in the figures does not constitute a limitation to the embodiments of the present disclosure, and may include more or less steps than shown, or combine some steps, or different steps.

The device embodiments described above are only schematic, in which the units described as separate components may or may not be physically separated, that is, they may be located in one place, or they may be distributed to multiple network units. Some or all of the modules may be selected according to actual needs to achieve the purpose of this embodiment.

Those skilled in the art should understand that all or some of the steps in the methods, and functional modules/units in the systems and devices disclosed above may be implemented as software, firmware, hardware or appropriate combinations thereof.

The terms "first", "second", "third" and "fourth" in the specification of the present disclosure and the drawings, if any, are used to distinguish similar objects, and are not necessarily used to describe a specific order or sequence. It should be understood that the data so used may be interchanged under appropriate circumstances, so that the embodiments of the present disclosure described herein may be implemented in other orders than those illustrated or described herein. Furthermore, the terms "including" and "having" and any variations thereof are intended to cover non-exclusive inclusion, for example, a process, method, system, product or equipment that includes a series of steps or units is not necessarily limited to those explicitly listed, but may include other steps or units not explicitly listed or inherent to such process, method, product or equipment.

It should be understood that in the present disclosure, "at least one (item)" means one or more, and "multiple" means two or more. "and/or" is used to describe the relationship of related objects, indicating that there may be three kinds of relationships. For example, "A and/or B" may indicate that there are only A, only B and both A and B, where A and B may be singular or plural. The character "/"generally indicates that the context object is an OR relationship. The terms "at least one of the following (items)" or its similar expression refers to any combination of these items, including any combination of single items or plural items. For example, "at least one of A, B or C" may be expressed as: A, B, C, A and B, A and C, B and C, or A and B and C, where A, B and C may be singular or plural.

In several embodiments disclosed in the present disclosure, it should be understood that the disclosed devices and methods may be realized in other ways. For example, the device embodiment described above is only schematic. For example, the division of the above-mentioned units is only a logical function division, and there may be another division way in actual implementation, for example, multiple units or components may be combined or integrated into another system, or some features may be ignored or not implemented. On the other hand, the mutual coupling or direct coupling or communication connection shown or discussed may be indirect coupling or communication connection through some interfaces, devices or units, which may be electrical, mechanical or other forms.

The units described above as separate components may or may not be physically separated, and the components displayed as units may or may not be physical units, that is, they may be located in one place or distributed to multiple network units. Some or all of the units may be selected according to actual needs to achieve the purpose of this embodiment.

In addition, each functional unit in each embodiment of the present disclosure may be integrated into one processing unit, or each unit may exist physically alone, or two or more units may be integrated into one unit. The above integrated units may be realized in the form of hardware or software functional units.

Integrated units may be stored in a computer-readable storage medium if they are implemented in the form of software functional units and sold or used as independent products. Based on this understanding, the technical scheme of the present disclosure, either the part that contributes to the existing technology, or a part or all of the technical scheme of the present disclosure, may be essentially embodied in the form of software products, which are stored in a storage medium and include multiple instructions to make a computer device (which may be a personal computer, a server, a network device, etc.) execute all or part of the steps of the method of various embodiments of the present disclosure. The aforementioned storage media include: U disk, mobile hard disk, Read-Only Memory (ROM), Random Access Memory (RAM), magnetic disk or optical disk and other media that can store programs.

The embodiments of the present disclosure have been described above with reference to the accompany drawings, and the scope of rights of the embodiments of the present disclosure is not limited thereby. Any modification, equivalent substitution and improvement made by those skilled in the art without departing from the scope and essence of the embodiments of the present disclosure shall be within the scope of the rights of the embodiments of the present disclosure.

## Claims

1. A data transmission method, comprising:
performing a shared secret key check between a sender and a receiver to obtain secret key check information;
in response to the secret key check information indicating that no secret key is shared, performing secret key negotiation between the sender and the receiver to obtain a shared master secret key;
generating, by the sender, a content secret key according to preset stream identification information;
encrypting, by the sender, the content secret key according to the shared master secret key to obtain an encryption secret key, and sending, by the sender, the encryption secret key to the receiver;
encrypting, by the sender, original data to be sent according to the content secret key and the stream identification information to obtain target data, and sending, by the sender, the target data to the receiver;
decrypting, by the receiver, the target data according to the stream identification information, the shared master secret key and the encryption secret key to obtain the original data.

2. The method of claim 1, wherein performing secret key negotiation between the sender and the receiver to obtain a shared master secret key, comprises:
sending, by the sender, identity information to the receiver, such that the receiver performs authentication according to the identity information to obtain authentication information;
in response to the authentication information indicating that the authentication passes, establishing communication connection between the sender and the receiver; and
generating, by the sender, the shared master secret key, and sending, by the sender, the shared master secret key to the receiver.

3. The method of claim 1, wherein encrypting, by the sender, original data to be sent according to the content secret key and the stream identification information to obtain target data, and sending, by the sender, the target data to the receiver, comprises:
selecting, by the sender, candidate data from the original data according to the stream identification information; and
encrypting, by the sender, the candidate data according to the content secret key to obtain the target data, and sending, by the sender, the target data to the receiver.

4. The method of claim 1, wherein decrypting, by the receiver, the target data according to the stream identification information, the shared master secret key and the encryption secret key to obtain the original data, comprises:
decrypting, by the receiver, a plurality of encryption secret keys according to the shared master secret key to obtain a plurality of content secret keys;
selecting, by the receiver, a selected secret key from the plurality of content secret keys according to the stream identification information;
decrypting, by the receiver, the target data according to the selected secret key to obtain the original data.

5. The method of any one of claims 1 to 4, wherein after encrypting, by the sender, original data to be sent according to the content secret key and the stream identification information to obtain target data, the method further comprises:
performing, by the sender, scrambling transmission on the target data, which comprises:
scrambling, by the sender, the target data to obtain noise random data; and
sending, by the sender, the noise random data to the receiver, such that the receiver receives the noise random data for descrambling to obtain the target data.

6. The method of any one of claims 1 to 4, wherein before encrypting, by the sender, original data to be sent according to the content secret key and the stream identification information to obtain target data, the method further comprises:
generating, by the sender, the original data, which comprises:
acquiring, by the sender, data to be sent;
performing, by the sender, format conversion on the data to be sent to obtain the original data.

7. The method of any one of claims 1 to 4, wherein after encrypting, by the sender, original data to be sent according to the content secret key and the stream identification information to obtain target data, the method further comprises:
performing, by the sender, encryption marking on the target data, which comprises:
generating, by the sender, encryption mark information according to the stream identification information, wherein, the encryption mark information is configured to indicate that the target data is encrypted data;
sending, by the sender, the encryption mark information to the receiver.

8. A data transmission apparatus, comprising a sender and a receiver, wherein the sender comprises a first authentication module, a first secret key negotiation module, an encryption module and a first transmission module; and the receiver comprises a second authentication module, a second secret key negotiation module, a decryption module and a second transmission module; wherein,
a shared secret key check is performed between the first authentication module and the second authentication module to obtain secret key check information;
in response to the secret key check information indicating that no secret key is shared, secret key negotiation is performed between the first authentication module and the second authentication module to obtain a shared master secret key;
the first secret key negotiation module generates a content secret key according to preset stream identification information;
the first secret key negotiation module encrypts the content secret key according to the shared master secret key to obtain an encryption secret key, and the first transmission module sends the encryption secret key to the second secret key negotiation module;
the encryption module encrypts original data to be sent according to the content secret key and the stream identification information to obtain target data, and the first transmission module sends the target data to the second transmission module; and
the decryption module decrypts the target data according to the stream identification information, the shared master secret key and the encryption secret key to obtain the original data.

9. An electronic device, comprising a memory and a processor, wherein the memory stores a computer program which, when executed by the processor, implements the data transmission method of any one of claims 1 to 7.

10. A computer-readable storage medium, storing a computer program which, when executed by a processor, implements the data transmission method of any one of claims 1 to 7.
